Europäisches Patentamt

**European Patent Office**

Office européen des brevets

(19)

(11) Publication number: **0 074 583**

**A2**

(12)

# EUROPEAN PATENT APPLICATION

(21) Application number: **82108149.4**

(22) Date of filing: **03.09.82**

(51) Int. Cl.³: **F 16 D 41/30**

(30) Priority: **16.09.81 IT 2399381**

(43) Date of publication of application:
**23.03.83 Bulletin 83/12**

(84) Designated Contracting States:
**AT BE CH DE FR GB LI LU NL SE**

(71) Applicant: **Campagnolo S.p.A.
Via della Chimica
I-36100 Vicenza(IT)**

(72) Inventor: **Campagnolo, Tullio
Corso Padova, 178
I-36100 Vicenza(IT)**

(74) Representative: **Vatti, Paolo, Dr. Ing. et al,
Fumero - Studio Consulenza Brevetti
Widenmayerstrasse 4/1
D-8000 München 22(DE)**

(54) **Free-wheel for bicycles.**

(57) A free-wheel for bicycles, composed of an inner body, from the periphery of which at least two diametrically opposed pawls project, oscillating freely on their axes fixed to the inner body, and an outer body provided with a serration in which said pawls are engaged under the thrust of respective wire spring means. Each spring is pivoted in a pin very near the pin of the respective pawl and on the same side as the point of contact between the free ends, interacting, of said spring and pawl. Furthermore, the lower surface of each pawl contains a central sliding groove for the end of the relevant spring, which also intersects the pin of the pawl.

Fig. 2

EP 0 074 583 A2

- 1 -                           **0074583**

"FREE-WHEEL FOR BICYCLES"

═✗═✗═✗═

This invention concerns improvements to free-wheels, and in particular, to free-wheels for bicycles.

To be more precise, the invention concerns an improved arrangement of the pawls of the free-wheels for bicycles and of the respective pressure springs, through the use of which, on one hand the assembly of the free-wheel in manufacturing phase is greatly simplified, and on the other, the slippages between said springs are reduced considerably, and almost completely removed, so that a high safety level and long life of the device are obtained, eliminating major causes of breakage and inefficiency of said free-wheels.

Experts in the sector are aware that the structure of the free-wheels for bicycles adopted by preference today is that of an inner body, integral in rotation with the wheel, rotated by an outer body, carrying the sprockets· driven by the bicycle chain, by means of at least one oscillating pawl integral with the inner body and elastically urged to engage a serration obtained in the outer body. They are also aware that to date the elastic engagement of the pawls in said serration has been obtained by means of wire or blade springs, positioned opposite pawls, i.e. pivoted in a fixed point of the periphery of the inner body, located, with respect to the free end of the pawl or to the point of contact between spring and pawl, on the opposite side of the pivoting axis of said pawl.

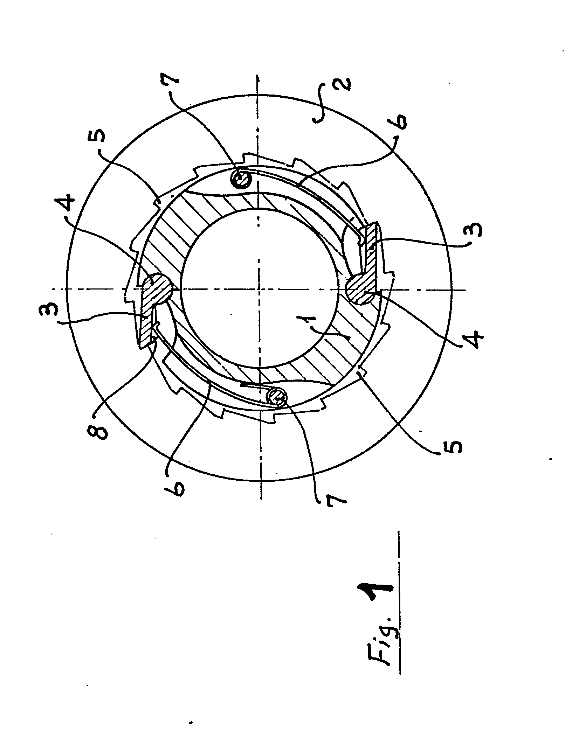

This known arrangement is shown in figure 1, which is a cross-section of a free-wheel for bicycles, comprising an inner body 1, and outer body 2 and a couple of pawls 3 oscillating, through their pin-shaped ends 4, on the inner body 1, to engage with their free ends the serrated seats 5 of a serration obtained in the outer body 2.

In the free-wheel in figure 1, the pawls 3 are elastically urged to engage the seats 5 of wire pressure springs 6, one end of which

- 2 -                                    0074583

are wound on pins 7 of the inner body 1 and the opposite end resting on the inner surface of the pawls 3. As may be seen, the pawls 3 and springs 6 are in opposite position, the centres of rotation of the pawls and springs being positioned on opposite sides in respect to their point of contact.

It is evident, in this arrangement, that when the inner body 1 rotates in clockwise direction, while the outer body 2 remains stationary (situation corresponding to "free-wheel" rolling), the pawl 3 oscillates around its pin 4 in opposite direction (e.g. in anticlockwise direction when it is thrust towards the centre) to that of the wire spring 6 (i.e. in clockwise direction in the same conditions).

This position is determined by the need to insert spring 6 in the restricted anular space available between bodies 1 and 2, with a sufficiently lond arm to give to the pawl (even with fairly wide oscillations at its end) a sufficient pressure thrust.

Although widely adopted in free-wheels for bicycles, this arrangement has some drawbacks:

A) On one hand, in production: for assembly, it is in fact foreseen to insert first the two panels in their pivoting seats then the springs on the respective through-pins, so that the operator pushes the point of a first pawl under the respective pawl, holds it in closing position to avoid spring release, normally with the aid of special pliers, then again pushes the point of the second pawl under the other pawl and moves the pliers to keep also this second pawl closed. Finally still keeping the pliers closed, he inters body 1 in body 2, taking care not to release the pliers until the pawls are safely engaged in the serration 5 of the outer body.

This is obviously not an easy operation and often one or both springs suddenly jump from their seats, and it is necessary to repeat the operation.

B) On the other hand, in use: the position is, in fact such that, during the oscillation movement of the pawl, a fair degree of slippage is produced between the point of the pressure spring and the lower face of the pawl. Furthermore, this movement is in the direction of reciprocal wedging of the two points in the very phase in which the pawl is lowered, i.e. when it must overcome the force of the spring. This may easily cause some crawlings - with loss of mechanism efficiency and problems for the bicycle user (in competitions, these problems may seriously jeopardise the race results) - and also, through time, as the point of the spring produced by said relevant slippage becomes torn, may cause breakage or curling up of the spring, capable of putting a free-wheel and the bicycle completely out of use (and, in competitions, having even a champion disqualified).

In an endeavour to overcome these problems, it has already been proposed, but with practical results of little importance for both the abovementioned problems, to form a short groove in the lower face of the free end of the pawl. In this way the point of the wire spring is guided and its side gripped, both in the assembly phase and during use of the free-wheel.

For the same purpose it was also proposed to use a blade spring - rather a wire spring - which is more stable in its seat.

These proposals, both adopted in practice today, have however definitely not completely overcome the abovementioned problems.

The purpose of this invention is, in fact to eliminate these problems and in particular:

- on one hand to permit an easier and rapid assembly, without the aid of special tools;

- on the other hand, to permit a springing of the pawls with minimum relevant movement between their lower face and the points of the springs, and therefore with negligible frictions, and no risk of craling or breakage.

This result is obtained due to the fact that the pawls and their pressure springs are assembled with equal orientation the centres of rotation of a pawl and of the relevant spring being positioned at a minimum reciprocal distance and in the same side of the points of contact between the free ends of the same pawl and spring.

According to a further feature of the invention, on the lower face of each pawl there is a groove for the lateral guide of the wire spring, this groove extending and intersecting also the pivoting ends of the same pawl.

Further characteristics and advantages of this invention will be understood from the following description of a preferred embodiment thereof and on hand of the accompanying drawings in which:

Fig. 1 is, as already described, a cross-section at the axis of a free-wheel according to the known art, and

Fig. 2 is a similar cross-section of a free-wheel according to this invention;

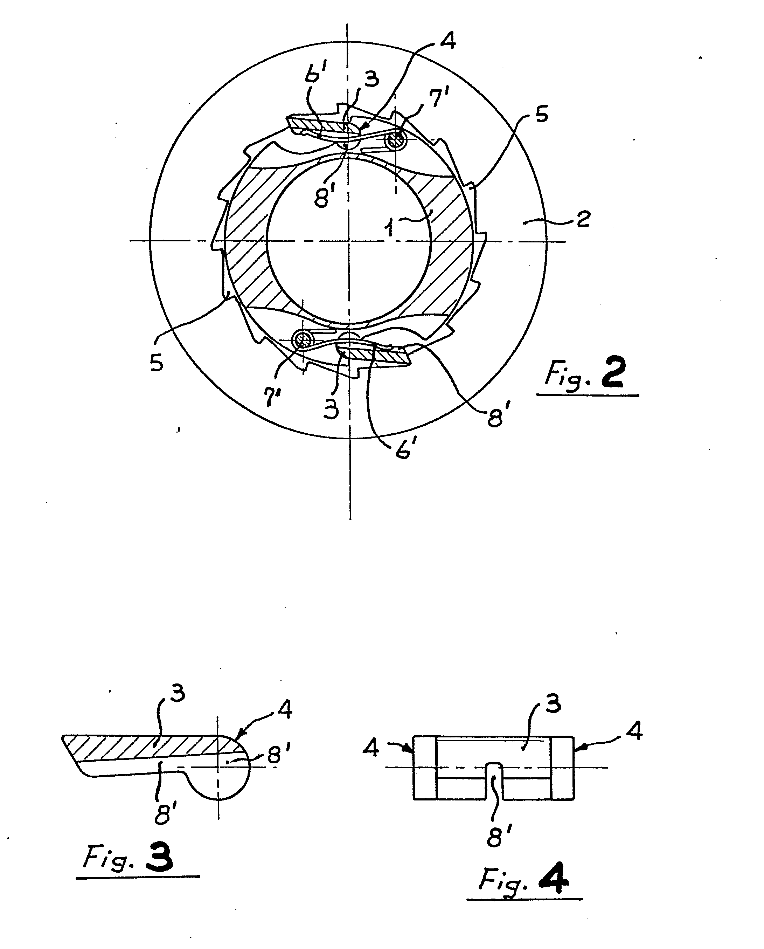

Figs. 3 and 4 show in longitudinal section and front view the detail of the pawl.

As shown in Fig. 2, in a free-wheel similar to those of the preceding art as to its general configuration, the pawls 3 and springs 6' are arranged in the same direction, that is, so that the centres of rotation of the pawls and springs are on the same side with respect to their point of contact. More precisely, the centre of rotation of the springs 6 near the axis of the pins 7', is very near the centre of oscillation of the pawls 3, coinciding with the pin end axis 4 of the said pawls 3, pivoted on a suitable recess of the inner body 1.

As evidenced by the drawing without requiring further explanations, this arrangement reduces almost completely the sliding of the ends of the springs 6' on the inner face of the pawls 3 engaged thereby. In addition, with the centres of rotation being on the same side with respect to the point of contact between the tip of the spring and the end of the pawl, the mutual wedging-in movement in the downward moving phase of the pawl is altogether eliminiated. This consents a considerable reduction in the friction and almost completely eliminates the wear produced by the sliding friction, while preventing still further the crawlings and breakages resulting therefrom thus ensuring the free-wheel a smooth running and a working life decidedly higher than those of the conventional free-wheels.

In addition, the absence of the sliding friction and any resulting friction makes the movement of the pawls much smoother and allows the use of springs that are less stressed and sized only for balancing the weight of the pawl and the inertia of the latter when moving, the springs not being required - as in the conventional kind of free-wheel - to overcome the wedging-in, as expected in the known art, of the springs and pawls. Thus, not only the wear of the springs and pawls, but also that of the saw-tooth surfaces of the outer body 2, limiting the seats 5, is considerably reduced with the therefrom ensuing advantages.

Finally, the arrangement according to this invention, favours the assembly in the construction phase: in fact, the operator inserts first the spring on the respective pin, then - while keeping it momentarily well gripped with the left hand - fixes the pawl, making sure to house the spring in the through hole 3'. After the assembly of the pawl, the latter securely detains also the respective spring in its seat, so that the operator is free to proceed with the assembly of the second pawl without the risk of the spring of the first pawl jumping out of its seat. After the assembly of the second pawl, all he has to do is to grip the inner body 1 and insert it into the body 2 with a slight pressure and short rotation, without any particular difficulty and without the use of special tools.

Obviously the invention is not limited to the particular embodiment described and shown in Fig. 2. For example the centres of rotation of the pawls and the relevant springs could be coincident.

- 6 -

0074583

CLAIMS

1) A free-wheel for bicycles, composed of an outer body provided with an internal serration and of an inner body, from the periphery of which at least two diametrically opposed pawls project, oscillating freely on their axes fixed to the inner body, said pawls being urged against said serration by wire spring means, characterized in that the pawls and the wire springs are assembled with equal orientation, the centres of rotation of each pawl and of the relevant spring being positioned in the same side in respect of the points of contact between the free ends of the same pawl and spring.

2) A free-wheel for bicycle as in claim 1) in which the centres of rotation of said pawls and springs are at a minimum reciprocal distance.

3) A free-wheel for bicycle as in claim 1) in which the centres of rotation of said pawls and springs are coincident.

4) A free-wheel for bicycle as in claim 1) in which a groove is provided on the lower face of each pawl for the lateral guide of the wire spring, said groove extending and intersecting the pivoting ends of the same pawl.

Fig. 1

_Fig._ **2**

_Fig._ **3**

_Fig._ **4**